# EUROPÄISCHE PATENTSCHRIFT

(11) **EP 0 606 850 B1**
(45) Veröffentlichungstag und Bekanntmachung des Hinweises auf die Patenterteilung: **20.09.2000**
(21) Anmeldenummer: 94100126.5
(22) Anmeldetag: 05.01.1994
(51) Int. Cl.: H01M 2/30, H01M 10/02

(54) **Akkumulator mit die Pole verdeckender lösbarer Abdeckplatte**
Battery with detachable cover plate covering the terminals
Accumulateur avec panneau de recouvrement détachable couvrant les bornes

(30) Priorität: 12.01.1993 DE 4300567
(43) Veröffentlichungstag der Anmeldung: 20.07.1994
(73) Patentinhaber: HAGEN Batterie AG, D-59494 Soest (DE)
(72) Erfinder: Wulf, Ulrich, D-59494 Soest (DE); Scholz, Detlef, D-59494 Soest (DE); Nann, Eberhard, Dr., D-59494 Soest-Deiringsen (DE)
(74) Vertreter: Manitz, Finsterwald & Partner

(56) Entgegenhaltungen:
- EP-A- 0 306 746
- DE-A- 3 333 308
- GB-A- 1 548 129

## Beschreibung

Die Erfindung betrifft einen Akkumulator mit wenigstens einem in einem Eckbereich des Deckels angeordneten Metallpol nach dem Oberbegriff des Patentanspruchs 1.

Endpolabdeckungen herkömmlicher Bauweise (DIN 72.311 - Teil 17, September 1976, Seiten 1, 2) sind mittels eines Schnapphakens befestigt, der unter den unteren Rand einer am Deckel vorgesehenen umlaufenden Deckelschürze greift. Bei zu geringem Hinterschnitt zwischen Deckelschürze und dem darunter befindlichen Akkumulatorgehäuse ist die Halterung der Endpolkappe unzureichend. Nachteilig an dem bekannten Akkumulator ist weiter, daß durch das Übergreifen des Schnapphakens über den Außenumfang der Deckelschürze die Außenabmessungen der Batterie verändert werden, was bei engen Einbauverhältnissen, wie dem Zusammenschluß mehrerer Einzelakkumulatoren zu Batterieblöcken das Lösen des Schnapphakens erschwert. Weiter erweist sich bei den bekannten Endpolkappen als nachteilig, daß bei häufig wechselnden Einbausituationen des Kabelverbinders der Schnapphaken im Wege steht. Aus dem gleichen Grund ist auch die Zuführung mehrerer der im allgemeinen sehr dicken Kabel zu einem mit der bekannten Abdeckkappe abgedeckten Pol problematisch, wenn nicht gar unmöglich.

Das Ziel der Erfindung besteht darin, einen Akkumulator der eingangs genannten Gattung zu schaffen, dessen Polabdeckkappe weder die seitlichen Außenabmessungen des Akkumulators nicht verändert und insbesondere den universellen Anschluß von Kabeln ermöglicht, ohne daß die Güte der Halterung der Abdeckkappe am Deckel des Akkumulators und seine Manipulierbarkeit beeinträchtigt werden.

Zur Lösung dieser Aufgabe sind die Merkmale des kennzeichnenden Teils des Anspruches 1 vorgesehen.

Der Erfindungsgedanke ist also darin zu sehen, daß sich die Rastmittel oberhalb der Bodenfläche der Vertiefung befinden, so daß der darunter befindliche Teil des Deckels, insbesondere die Deckelschürze für die Befestigung der Deckplatte nicht benötigt wird. Besonders vorteilhaft ist dabei, daß die seitlichen Abmessungen des Akkumulators durch die Abdeckkappe nicht beeinflußt werden.

Vorteilhafte Weiterbildungen der Erfindung sind durch die Ansprüche 2 bis 5 gekennzeichnet.

Im allgemeinen werden die Abdeckplatten gemäß Anspruch 3 in seitlicher Richtung festgehalten. In diesem Fall ist die Anordnung des die Halterung nach oben bewirkenden Rastvorsprunges nach Anspruch 7 vorteilhaft.

Eine erste praktische Ausführungsform ist durch die Ansprüche 8, 9 gekennzeichnet.

Eine besonders gute Halterung der Abdeckkappe wird auch durch die Ausführungsform nach den Ansprüchen 10, 11 erzielt.

Eine weitere vorteilhafte Ausführungsform ist in den Ansprüchen 12 bis 15 gekennzeichnet.

Mit besonderem Vorteil wird die Erfindung bei einem Akkumulator nach Anspruch 16 angewendet, weil durch die erfindungsgemäßen Maßnahmen der Abstand der Deckeloberfläche von dem unteren Rand der Deckelschürze nicht mehr kritisch ist.

Besonders zweckmäßig ist die zweiteilige Ausbildung der Abdeckplatte nach den Ansprüchen 17 bis 19, weil hierdurch ihre Montage und Demontage erleichtert ist.

Bevorzugte Ausbildungen der Abdeckplatte entnimmt man Anspruch 20.

Die Erfindung schafft somit eine Endpolabdeckkappenbefestigung, die lediglich oberhalb der umlaufenden Deckelschürze angeordnet ist, wodurch die vorgeschriebenen Abmessungen des Akkumulators nicht beeinträchtigt werden und ein Lösen der Abdeckplatte auch bei engen Raumverhältnissen möglich ist. Erfindungsgemäß können außerdem Kabel von beiden Seiten der Ecke sowie von der Ecke selbst her problemlos zum Pol geführt werden. Es können auch ohne weiteres mehrere Kabel an den Pol herangeführt werden, ohne daß dies durch die Abdeckplatte behindert wird.

Hierdurch wird es nämlich ermöglicht, daß zunächst der die Haltestifte tragende Teil der Abdeckplatte mit dem Deckel in festen Eingriff gebracht wird und daß anschließend der zunächst etwas um das Scharnier hochgeklappte und den Rastvorsprung tragende Deckelteil zwecks Eingriffs des Rastvorsprunges in die Rastvertiefung nach unten geklappt wird. Beim Lösung der Abdeckplatte kann dann in umgekehrter Richtung zunächst der Rastvorsprung mit der Rastvertiefung durch Nach-Oben-Klappen außer Eingriff gebracht werden, worauf dann in einem zweiten Arbeitsschritt die Haltestifte aus den zugeordneten Löchern herausgezogen werden. Das Montieren und Demontieren der Kabelverbinder am Pol kann bei hochgeklapptem Teil der Abdeckplatte erfolgen.

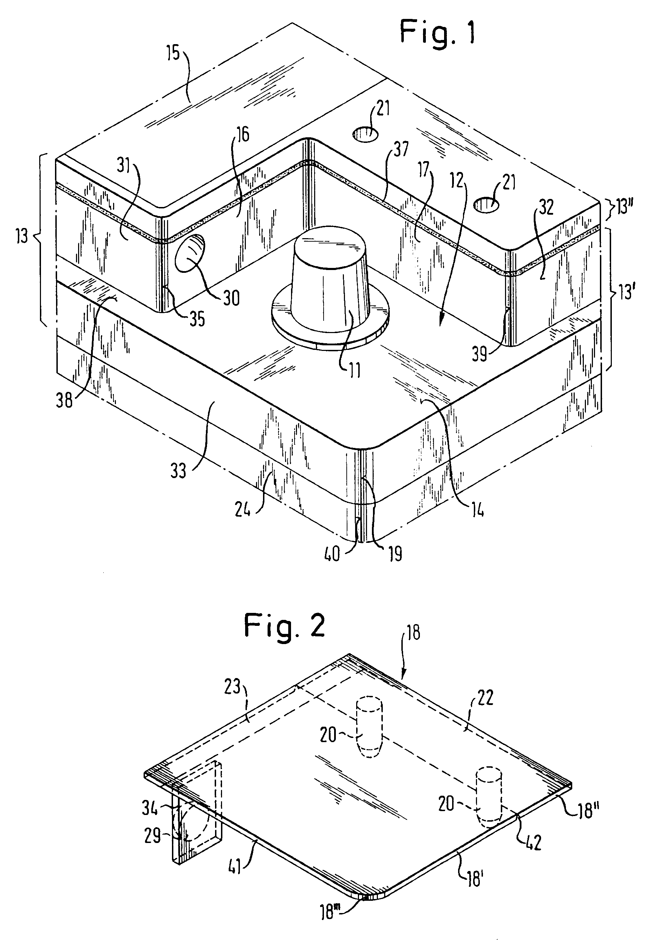

Die Erfindung wird im folgenden beispielsweise anhand der Zeichnung beschrieben; in dieser zeigt
- Fig. 1: eine perspektivische Schrägdraufsicht auf einen erfindungsgemäß ausgebildeten Eckbereich eines Akkumulators bei abgenommener Abdeckplatte,
- Fig. 1: eine entsprechende perspektivische Ansicht der für die Ausführungsform nach Fig. 1 bestimmten Abdeckplatte,
- Fig. 3: eine zu Fig. 1 analoge perspektivische Schrägdraufsicht einer weiteren Ausführungsform bei abgenommener Abdeckplatte,
- Fig. 4: eine entsprechende perspektivische Schrägdraufsicht der Abdeckplatte für die Ausführungsform nach Fig.3,
- Fig. 5: eine zu den Fig. 1 und 3 analoge perspektivische Schrägdraufsicht einer weiteren Ausführungsform bei abgenommener Abdeckplatte und
- Fig. 6: eine perspektivische Schrägdraufsicht der Abdeckplatte für die Ausführungsform nach Fig. 5.

Nach Fig. 1 weist ein nur teilweise dargestelltes Akkumulatorgehäuse 24 einen Deckel 13 auf, der an seiner Unterseite mit einer rundumlaufenden und seitlich über das Gehäuse 24 vorspringenden Deckelschürze 33 versehen ist. Oberhalb der Deckelschürze 33 springt der Deckel 13 bei 38 wieder etwas zurück und bildet anschließend vertikale Seitenwände, von denen in Fig. 1 nur die bis zu Ecken 35, 39 verlaufenden Endteile 31, 32 dargestellt sind.

Im Bereich einer Ecke 19 der Deckelschürze 33 bzw. 40 des Gehäuses 24 weist der Deckel eine Vertiefung 12 von rechteckigem oder quadratischem Horizontalquerschnitt auf, deren Bodenfläche 14 mit der oberen Fläche 38 der Deckelschürze 33 bündig ist.

Die Vertiefung 12 ist nach außen offen und nach innen durch rechtwinklig zueinander und vertikal angeordnete Seitenwände 16, 17 begrenzt sowie unten durch eine Bodenfläche 14 abgeschlossen.

Von der Bodenfläche 14 erstreckt sich in deutlichem Abstand von den Seitenwänden 16, 17 und der Deckelschürze 33 ein vorzugsweise aus Blei bestehender Metallpol 11 senkrecht nach oben. In vertikaler Richtung ist seine Länge etwas geringer als die Höhe der Vertiefung 12.

In der Deckeloberfläche 15 sind in gleichem Abstand hinter der Seitenwand 17 zwei voneinander beabstandete Löcher 21 vorgesehen, in welche an der Unterseite einer in Fig. 2 dargestellten Abdeckplatte 18 mitangespritzte, zu ihnen komplementäre Haltestifte 20 klemmend eingreifen können. Die Haltestifte 20 sind in einem gestrichelt angedeuteten Randstreifen 22 der Abdeckplatte 18 vorgesehen, welcher nach dem Aufsetzen der Abdeckplatte 18 auf den Deckel 13 nach Fig. 1 auf der Deckeloberfläche 15 zur Anlage kommt.

Ein im rechten Winkel zu dem Randstreifen 22 vorgesehener Randstreifen 23 der Abdeckplatte 18 kommt beim Aufsetzen derselben auf den Deckel 13 auf einem schmalen Streifen der Deckeloberfläche 15 unmittelbar neben dem oberen Ende der Seitenwand 16 zur Auflage.

Nahe dem von dem Randstreifen 22 abgewandten Rand 41 der Abdeckplatte 18 und unmittelbar neben dem anderen Randstreifen 23 erstreckt sich von der unteren Fläche der Abdeckplatte 18 ein als Federsteg ausgebildeter Vorsprung 34, der nach Art einer Blattfeder ausgebildet ist, deren Ebene parallel zur Ebene der Seitenwand 16 verläuft. Im unteren Bereich des Vorsprunges 34 ist ein sich zur Seitenwand 16 hin erstreckender Rastvorsprung 29 vorgesehen, der beim Aufsetzen der Abdeckplatte 18 auf den Deckel 13 nach Fig. 1 in eine in der Seitenwand 16 vorgesehene komplementäre Rastvertiefung 30 einschnappen kann.

Parallel zum Randstreifen 22 bzw. zur Verbindungslinie der beiden Haltestifte 20 ist die Abdeckplatte 18 durch ein Scharnier 42 in zwei Teile 18', 18'' unterteilt, von denen einer 18' den Vorsprung 34 und der andere 18'' die Haltestifte 20 trägt. Die über den Ecken 19, 40 des Deckels bzw. Gehäuses liegende Ecke 18''' der Abdeckplatte 18 ist abgerundet.

Der Deckel 13 nach Fig. 1 ist aus durch eine horizontale Schweißebene 37 voneinander getrennten Deckelteilen 13', 13'' zusammengeschweißt.

Die Montage der erfindungsgemäßen Abdeckplatte 18 geht wie folgt vor sich:
Nachdem die nicht dargestellten Kabelverbinder am Pol 11 angebracht sind, werden zunächst die Haltestifte 20 in die zugeordneten Löcher 21 eingesteckt, wobei der den Vorsprung 34 tragende Teil 18' der Abdeckplatte 18 um das Scharnier 42 etwas hochgeklappt sein kann. Sobald der Teil 18'' mit dem Randstreifen 22 vollständig auf der Deckeloberfläche 15 aufliegt, wird der den Vorsprung 34 tragende Teil 18' der Abdeckplatte 18 nach unten geklappt, wobei der Vorsprung 34 beim Entlanggleiten des Rastvorsprunges 29 an der Seitenwand 16 zunächst etwas von der Seitenwand 16 federnd weggebogen wird, bis schließlich der Rastvorsprung 29 in die Rastvertiefung 30 einschnappt, worauf die Abdeckplatte 18 endgültig festgelegt ist. Die kugelkuppenartige Ausbildung des Rastvorsprunges 29 und der Rastvertiefung 30 sorgen dafür, daß auch ein Ausrasten durch Hochheben der Abdeckplatte 18 möglich ist.

Aufgrund der erfindungsgemäßen Ausbildung ist der gesamte Raum beidseits der Ecke 19 zwischen der Bodenfläche 14 und der aufgesetzten Abdeckplatte 18 frei für den Durchgang von Kabeln, die mit dem Pol 11 in Verbindung stehen.

Die Verbindung zwischen dem Kabel und dem Pol 11 kann bei abgenommener Abdeckplatte 18 oder auch bei nur hochgeklapptem Teil 18' vorgenommen werden.

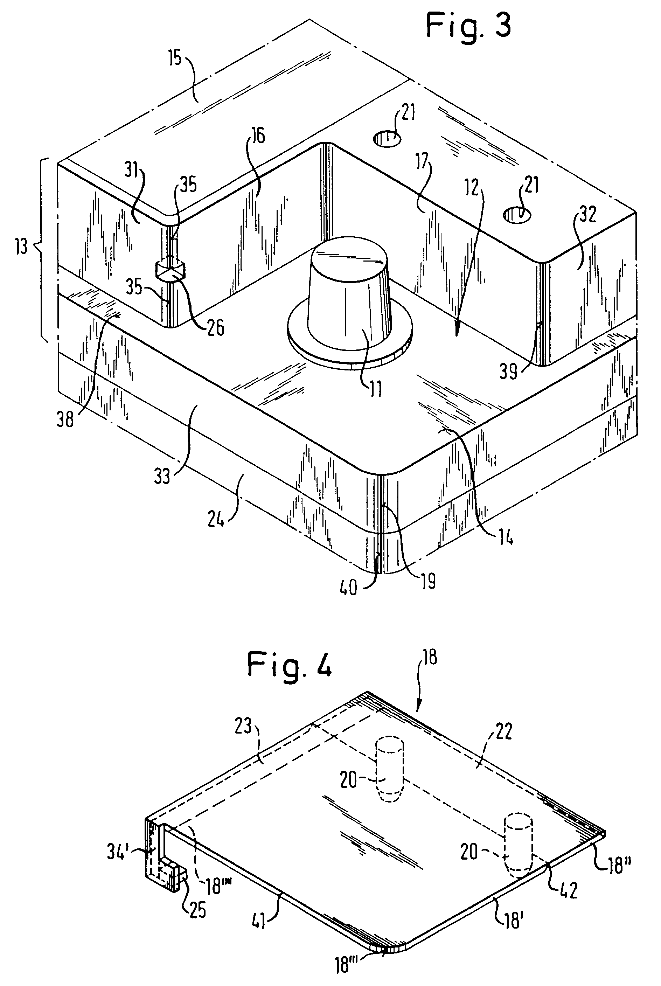

Beim Ausführungsbeispiel nach den Fig. 3 und 4, in denen gleiche Teile mit gleichen Bezugszahlen wie in Fig. 1, 2 bezeichnet sind, ist der als Federsteg ausgebildete Vorsprung 34' in dem vom Randstreifen 22 abgewandten und dem Seitenwandendteil 31 zugewandten Eckbereich 18''' der Abdeckplatte 18 angeordnet. Der Vorsprung 34' ist wieder nach Art einer Blattfeder ausgebildet, wobei jedoch die Ebene des Vorsprunges 34' parallel zum Seitenwandendteil 31 bzw. senkrecht zur Seitenwand 16 verläuft, so daß der Rastvorsprung 25, der mit einer im Bereich der Ecke 35 vorgesehenen Rastvertiefung 26 zusammenarbeitet, von der Seitenwand 31 weg federnd verbiegbar ist.

Während beim Ausführungsbeispiel nach den Fig. 1 und 2 der Rastvorsprung 29 und der Vorsprung 34' vollständig im Bereich der Vertiefung 12 untergebracht sind, steht beim Ausführungsbeispiel nach den Fig. 3 und 4 der Vorsprung 34' um seine relativ geringe Dicke über die Seitenwand 31 vor. Die Dicke des Vorsprunges 34' ist jedoch so gering ausgebildet, daß ein seitliches Vorstehen über die Deckelschürze 33 vermieden ist. Andererseits können der Rastvorsprung 25 und die Rastvertiefung 26 problemlos so tief ausgebildet werden, daß eine sichere Rastverbindung geschaffen wird.

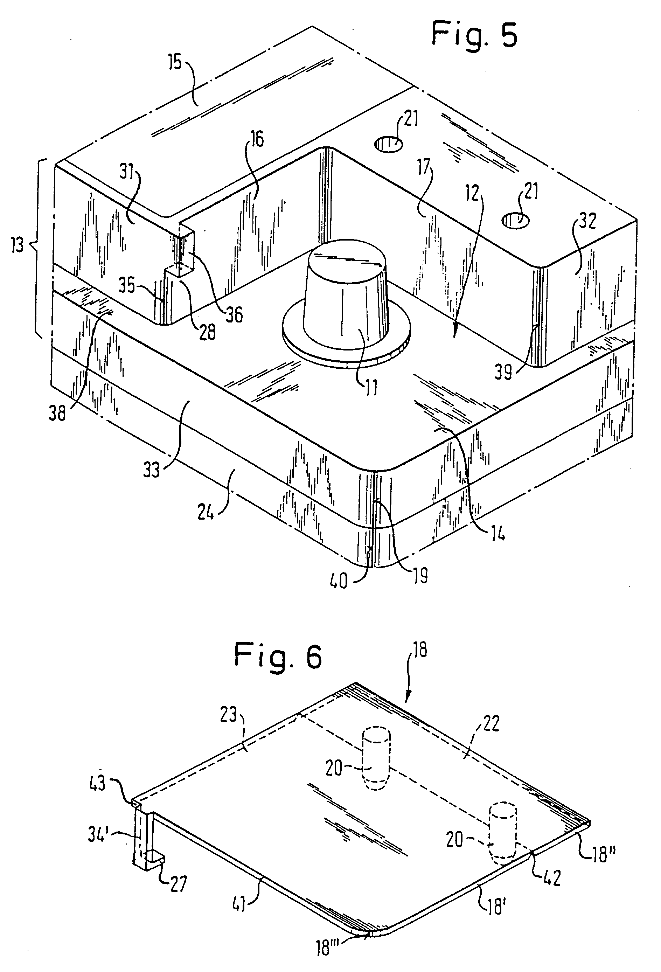

In dem Ausführungsbeispiel nach den Fig. 5 und 6, in denen wieder gleiche Bezugszahlen entsprechende Teile wie in den vorangehenden Figuren bezeichnen, ist gezeigt, daß die Rastvertiefung 28 auch dadurch verwirklicht werden kann, daß das Seitenwandteil 31 im oberen Bereich in die Vertiefung 12 hinein verlängert ist, wodurch ein Raststeg 36 vorliegt, unterhalb dessen die Rastvertiefung 28 ausgebildet ist. Unter den Raststeg 36 greift bei aufgesetzter Abdeckplatte 18 nach Fig. 6 ein Rastvorsprung 27, der an einem blattfederartig ausgebildeten Vorsprung 34' vorgesehen ist, welcher ähnlich wie in Fig. 4, also vom Seitenwandendteil 31 weg federnd ausgebildet ist. Grundsätzlich könnte der Raststeg 36 aber auch von einem Vorsprung untergriffen werden, der an einem Federsteg 34, wie er in Fig. 2 dargestellt ist, ausgebildet ist.

Der Vorsprung 34' und der Rastvorsprung 27 sind nach Fig. 6 so schmal ausgebildet, daß eine Korrespondenz mit der Breite der Rastvertiefung 28 gegeben ist. Gegenüber dem auf der Deckeloberfläche 15 aufliegenden Randstreifen 23 sind der Vorsprung 34' und der Rastvorsprung 27 etwas zur Ecke 18''' hin versetzt. Auf diese Weise kann einerseits der Randstreifen 23 sicher auf der Deckeloberfläche 15 aufliegen und gleichzeitig der Federsteg 34' mit dem Rastvorsprung 27 einwandfrei mit der Rastvertiefung 28 zusammenarbeiten. Die durch die Versetzung des Vorsprunges 34' gegenüber dem Randstreifen 23 gebildete Stufe ist mit 43 bezeichnet.

## Patentansprüche

1. Akkumulator mit wenigstens einem in einem Eckbereich seines Deckels (13) vorgesehenen Metallpol (11), der in einer vorzugsweise rechteckigen, insbesondere quadratischen Vertiefung (12), die nach innen durch insbesondere senkrecht zur Deckeloberfläche (15) verlaufende Wände (16, 17) begrenzt und nach außen offen ist und von deren vorzugsweise ebener Bodenfläche (14) der Metallpol (11) bis höchstens zur Deckeloberfläche (15) nach oben vorsteht, wobei die Vertiefung (12) oben durch eine mit zwei ineinander übergehenden Randstreifen (22, 23) auf der Deckeloberfläche (15) aufliegende, bevorzugt im wesentlichen rechteckige oder quadratische Abdeckplatte (18) abgedeckt ist, die durch sie gegen Bewegungen parallel zur Bodenfläche (14) fixierende Seitenhaltemittel (20, 21), vorzugsweise durch Stift(20)-Loch(21)-Verbindungen zwischen der unteren Fläche wenigstens eines der Randstreifen (22, 23) und dem Deckel (13) und vorzugsweise wenigstens einen sich nach unten erstreckenden Vorsprung (34, 34') an der Abdeckplatte (18) umfassende, sie gegen Bewegungen nach oben haltende Rastmittel (25, 26; 27, 28; 29, 30) lösbar am Deckel (13) gehalten ist und wenigstens auf einer Seite der Ecke (19) und im Bereich der Ecke (19) zwischen ihrer unteren Fläche und der Bodenfläche (14) eine Durchtrittsöffnung für ein an den Pol (11) anzuschließendes Kabel beläßt,
dadurch **gekennzeichnet,**
daß die Abdeckplatte (18) keine sich über die Außenkontur des Gehäuses (40) und/oder des Deckels (13) einschließlich einer etwaigen rundumlaufenden Deckelschürze (33) erstreckenden Teile aufweist und die Rastmittel (25, 26; 27, 28; 29, 30) im Bereich zwischen der Bodenfläche (14) und der Deckeloberfläche (15) vorgesehen sind.

2. Akkumulator nach Anspruch 1,
dadurch **gekennzeichnet,**
daß die Rastmittel (25, 26; 27, 28; 29, 30) nur im Bereich der Seitenwände (16, 17) der Vertiefung (12) vorgesehen sind.

3. Akkumulator nach Anspruch 1 oder 2,
dadurch **gekennzeichnet,**
daß die Rastmittel (25, 26; 27, 28; 29, 30) oberhalb der Bodenfläche (14) zwischen dem sich von der Abdeckplatte (18) nach unten erstreckenden Vorsprung (34, 34') und den Seitenwänden (16, 17) der Vertiefung (12) vorgesehen sind.

4. Akkumulator nach einem der vorhergehenden Ansprüche,
dadurch **gekennzeichnet,**
daß die Rastmittel eine Rastvertiefung (26, 28, 30) aufweisen, die oberhalb der Bodenfläche (14) in den Seitenwänden (16, 17) der Vertiefung (12) und/oder den in gleicher Höhe liegenden, diesen unmittelbar benachbarten Teilen (31, 32) der Seitenwände des Deckels (13) ausgebildet sind, und der Vorsprung (34, 34') der Abdeckplatte (18) einen mit der Rastvertiefung (26, 28, 30) zusammenarbeitenden Rastvorsprung (27, 29, 30) trägt und sich nach unten höchstens bis zur Bodenfläche 14 der Vertiefung (12) erstreckt.

5. Akkumulator nach Anspruch 4,
dadurch **gekennzeichnet,**
daß sich die Rastvorsprünge (25, 27, 29) seitlich nicht über die Außenkontur des Deckels (13), insbesondere einer nach unten an ihm vorgesehenen Deckelschürze (33) und des Gehäuses (40) hinauserstrecken.

6. Akkumulator nach einem der vorhergehenden Ansprüche,
dadurch **gekennzeichnet,**
daß die Abdeckplatte (18) an ihrem einen auf der Deckeloberfläche aufliegenden Randstreifen (22) wenigstens einen und vorzugsweise zwei sich nach unten in dazu komplementäre Bohrungen (21) des Deckels (25) erstreckende Haltestifte (20) trägt.

7. Akkumulator nach Anspruch 6,
dadurch **gekennzeichnet,**
daß der die Rastvorsprünge (25, 27, 29) tragende Vorsprung (34, 34') an oder nahe dem anderen Rand (23) angeordnet ist.

8. Akkumulator nach einem der vorhergehenden Ansprüche,
dadurch **gekennzeichnet,**
daß in einer (16) der Seitenwände (16, 17) der Vertiefung (12) eine Rastvertiefung (30) vorgesehen ist, in die ein an dem sich von einem randnahen Bereich der Abdeckplatte (18) nach unten erstreckenden, als senkrecht von der Seitenwand (16) federnd wegbiegbarer Federsteg ausgebildeten Vorsprung (34) vorgesehener Rastvorsprung (29) lösbar eingreift.

9. Akkumulator nach Anspruch 8,
dadurch **gekennzeichnet,**
daß die Rastvertiefung (30) nahe der Ecke (35) angeordnet ist, wo die Seitenwand (16) der Vertiefung (12) in die Seitenwand (31) des Deckels (15) übergeht.

10. Akkumulator nach einem der Ansprüche 1 bis 7,
dadurch **gekennzeichnet,**
daß im Bereich der Ecke (35) zwischen einer der Seitenwände (16) der Vertiefung (12) und der angrenzenden Seitenwand (31) des Deckels (15) eine Rastvertiefung (26) vorgesehen ist, in die ein an dem sich von der Abdeckplatte (18) nach unten erstreckenden, als Federsteg ausgebildeten Vorsprung (34') vorgesehener Rastvorsprung (25) eingreift.

11. Akkumulator nach Anspruch 10,
dadurch **gekennzeichnet,**
daß der Vorsprung (34') in Richtung von einer der Seitenwände (16, 31) oder der Ecke (35) weg federnd biegbar ist, um den Rastvorsprung (25) und die Rastvertiefung (26) außer Eingriff bringen zu können.

12. Akkumultor nach einem der Ansprüche 1 bis 7,
dadurch **gekennzeichnet,**
daß zur Bildung einer Rastvertiefung (28) von einer der Seitenwände (16, 17) der Vertiefung (12) ein Raststeg (36) in solchem Abstand von der Bodenfläche (14) der Vertiefung (12) vorspringt, daß darunter die Rastvertiefung (28) ausgebildet ist.

13. Akkumulator nach Anspruch 12,
dadurch **gekennzeichnet,**
daß der Raststeg (36) sich im oberen Bereich der zugeordneten Seitenwand (16, 17) befindet.

14. Akkumulator nach Anspruch 12 oder 13,
dadurch **gekennzeichnet,**
daß der Raststeg (36) an der Ecke (35) zum benachbarten Teil (31) der Seitenwand des Deckels (13) vorgesehen ist.

15. Akkumulator nach Anspruch 14,
dadurch **gekennzeichnet,**
daß der Raststeg (36) als Verlängerung des oberen Teils der benachbarten Seitenwand (31) des Deckels (15) ausgebildet ist.

16. Akkumulator nach einem der vorhergehenden Ansprüche,
dadurch **gekennzeichnet,**
daß der Deckel (13) aus zwei durch eine horizontale Schweißebene (37) voneinander getrennten Deckelteilen (13', 13'') besteht.

17. Akkumulator nach einem der vorhergehenden Ansprüche,
dadurch **gekennzeichnet,**
daß parallel zu dem durch die Seitenhaltemittel (21, 22), insbesondere die Haltestifte (20) und Bohrungen (21) am Deckel (13) gehaltenen Randstreifen (22) die Abdeckplatte (18) ein Scharnier (42) aufweist, um das der den Rastvorsprung (25, 27, 29) tragende Teil (18') der Abdeckplatte (18) nach oben bzw. unten klappbar ist, wobei die Rastmittel (25, 26; 27, 28; 29, 30) so ausgebildet sind, daß sie durch Herumklappen des sie tragenden Teils (18') um das Scharnier (42) in und außer Eingriff miteinander bringbar sind.

18. Akkumulator nach Anspruch 17,
dadurch **gekennzeichnet,**
daß das Scharnier (42) sich im Bereich des oberen Randes der zugeordneten Seitenwand (17) befindet.

19. Akkumulator nach Anspruch 17 oder 18,
dadurch **gekennzeichnet,**
daß das Scharnier (42) durch eine vorzugsweise in der unteren Fläche der Abdeckplatte (18) vorgesehene Rille realisiert ist.

20. Akkumulator nach einem der vorhergehenden Ansprüche,
dadurch **gekennzeichnet,**
daß die Ränder der Abdeckplatte (18) mit den oberen Rändern der Seitenwände (31, 32) des Deckels (15) fluchten und/oder ihre mit der Ecke (19, 40) des Deckels (13) bzw. des Gehäuses (24) fluchtende Ecke (18''') abgerundet ist.

## Claims

1. Accumulator having at least one metal terminal (11) provided in a corner region of its cover (13), the terminal being arranged in a preferably rectangular and especially square recess (12), which is bounded towards the inside by walls (16, 17) extending in particular perpendicular to the cover surface (15) and being open towards the outside, with the metal terminal (11) projecting upwardly from the preferably planar base surface (15) of the recess up to at most the surface (15) of the cover and with the recess (12) being covered over at the top by a preferably substantially rectangular or square cover plate (18) lying with two merging marginal strips (22, 23) on the surface (15) of the cover, with the cover plate being releasably held on the cover (13) by side holding means (20, 21), which fix it against movements parallel to the base surface (14), preferably by pin (20)-hole (21) connections between the lower surface of at least one of the marginal strips (22, 23) and the cover (13), and preferably including latch means (25, 26; 27, 28; 29, 30), which engage around at least one downwardly extending projection (34, 34') on the cover plate (18) and hold it against movements upwardly, and which, with the cover plate (18) leaving a passage opening for a cable which is to be attached to the terminal (11)at at least one side of the corner (19) and in the region of the corner (19) between its lower surface and the base surface (14), characterized in that the cover plate (18) has no parts which extend beyond the outer contour of the housing (40) and/or of the cover (13) including any possible cover skirt (33) which extends around it, and in that the latch means (25, 26; 27, 28; 29, 30) are provided in the region between the base surface (14) and the surface (15) of the cover.

2. Accumulator in accordance with claim 1, characterized in that the latch means (25, 26; 27, 28; 29, 30) are only provided in the region of the side walls (16, 17) of the recess (12).

3. Accumulator in accordance with claim 1 or claim 2, characterized in that the latch means (25, 26; 27, 28; 29, 30) are provided above the base surface (14) between the projection (34, 34') extending downwardly from the cover plate (18) and the side wall (16, 17) of the recess (12).

4. Accumulator in accordance with one of the preceding claims, characterized in that the latch means have a latch recess (26, 28, 30) which lie above the base surface (14) and are formed in the side walls (16, 17) of the recess (12) and/or in the parts (31, 32) of the side walls of the cover (13) which lie at the same level directly adjacent to them, and in that the projection (34, 34') of the cover plate (18) carries a latch projection (27, 29, 30) which cooperates with the latch recess (26, 28, 30) and extends downwardly at most up to the base surface (14) of the recess (12).

5. Accumulator in accordance with claim 4, characterized in that the latch projections (25, 27, 29) do not extend sideways beyond the outer contour of the cover (13), in particular of a cover skirt (33) provided on it at the bottom, and of the housing (40).

6. Accumulator in accordance with one of the preceding claims, characterized in that the cover plate (18) carries at its marginal strip (22) which contacts the cover surface at least one and preferably two holding pins (20) which extend downwardly into bores (21) of the cover (25) which are complementary thereto.

7. Accumulator in accordance with claim 6, characterized in that the projection (34, 34') carrying the latch projections (25, 27, 29) is arranged at or close to the other edge (23).

8. Accumulator in accordance with one of the preceding claims, characterized in that a latch recess (30) is provided in one (16) of the side walls (16, 17) of the recess (12), into which a latch projection (29) resiliently engages which is provided on the projection (34) which extends downwardly from a region of the cover plate (18) close to the edge and is formed as a resilient web which can be resiliently bent perpendicularly away from the side wall (16).

9. Accumulator in accordance with claim 8, characterized in that the latch recess (30) is arranged close to the corner (35) where the side wall (16) of the recess (12) merges into the side wall (31) of the cover (15).

10. Accumulator in accordance with one of the claims 1 to 7, characterized in that there is provided, in the region of the corner (35) between one of the side walls (16) of the recess (12) and the adjoining side wall (31) of the cover (15), a latch recess (26) into which a latch projection (25) engages, the latch projection (25) being provided on the projection (34') which extends downwardly from the cover plate and is formed as a resilient web.

11. Accumulator in accordance with claim 10, characterized in that the projection (34') can be bent resiliently away in the direction from one of the side walls (16, 31) or from the corner (35) in order to bring the latch projection (25) and the latch recess (26) out of engagement.

12. Accumulator in accordance with one of the claims 1 to 7, characterized in that, for the formation of a latch recess (28), a latch web (36) projects from one of the side walls (16, 17) of the recess (12) at a distance from the base surface (14) of the recess (12) in such a way that the latch recess (28) is formed beneath it.

13. Accumulator in accordance with claim 12, characterized in that the latch web (36) is located in the upper region of the associated side wall (16, 17).

14. Accumulator in accordance with claim 12 or 13, characterized in that the latch web (36) is provided at the corner (35) to the neighbouring part (31) of the side wall of the cover (13).

15. Accumulator in accordance with claim 14, characterized in that the latch web (36) is formed as an extension of the upper part of the neighbouring side wall (31) of the cover (15).

16. Accumulator in accordance with one of the preceding claims, characterized in that the cover (13) consists of two cover parts (13', 13'') separated from one another by a horizontal welding plane (37).

17. Accumulator in accordance with one of the preceding claims, characterized in that the cover plate (18) has a hinge (42) parallel to the marginal strip (22) held on the cover (13) by the side holding means (21, 22), in particular the holding pins (20) and bores (21), with the part (18') of the cover plate (18) carrying the latch projection (25, 26, 29) being pivotable upwardly or downwardly about the hinge (42), with the latch means (25, 26; 27, 28; 29, 30) being so formed that they can be brought into and out of engagement with one another by pivotal movement of the part (18') carrying them about the hinge (42).

18. Accumulator in accordance with claim 17, characterized in that the hinge (42) is located in the region of the upper edge of the associated side wall (17).

19. Accumulator in accordance with claim 17 or 18, characterized in that the hinge (42) is realised by a groove which is preferably provided in the lower surface of the cover plate (18).

20. Accumulator in accordance with one of the preceding claims, characterized in that the edges of the cover plate (18) are aligned with the upper edges of the side walls (31, 32) of the cover (15) and/or its corner (18''') which is aligned with the corner (19, 40) of the cover (13) of the housing (24) is rounded off.

## Revendications

1. Accumulateur comportant au moins une borne métallique (11) prévue dans une zone de coin de son couvercle (13), ladite borne étant agencée dans un renfoncement (12), de préférence rectangulaire et en particulier carré, qui est délimité vers l'intérieur par des parois (16, 17) s'étendant en particulier perpendiculairement à la surface (15) du couvercle et qui est ouvert vers l'extérieur, et la borne métallique (11) fait saillie vers le haut depuis la face de fond (14) de préférence plane de ce renfoncement au maximum jusqu'à la surface (15) du couvercle, le renfoncement (12) étant recouvert en haut par un panneau de recouvrement (18) de préférence sensiblement rectangulaire ou carré et reposant sur la surface (15) du couvercle par deux bandes de bord (22, 23) qui se transforment l'une dans l'autre, ledit panneau étant retenu de façon détachable sur le couvercle (13) par des moyens de maintien latéral (20, 21) qui le fixent à l'encontre de mouvements parallèlement à la face de fond (14), de préférence par des liaisons à tiges (20) et à tous (21) ente la face inférieure de l'une au moins des bandes de bord (22, 23) et le couvercle (13) et de préférence par au moins une saillie (34, 34') s'étendant vers le bas et comprenant, sur le panneau de recouvrement (18), des moyens d'enclenchement (25, 26 ; 27, 28 ; 29, 30) qui le retiennent à l'encontre de mouvements vers le haut, et ledit panneau épargnant une ouverture de passage pour un câble à raccorder à la borne (11) au moins sur un côté du coin (19) et dans la zone du coin (19) ente sa face inférieure et la face de fond (14), caractérisé en ce que le panneau de recouvrement (18) ne comprend aucune pièce s'étendant au-delà du contour extérieur du boîtier (40) et/ou du couvercle (13), y compris un tablier périphérique éventuel (33), et en ce que les moyens d'enclenchement (25, 26 ; 27, 28 ; 29, 30) sont prévus dans la région ente la face de fond (14) et la surface (15) du couvercle.

2. Accumulateur selon la revendication 1, caractérisé en ce que les moyens d'enclenchement (25, 26 ; 27, 28 ; 29, 30) ne sont prévus que dans la région des parois latérales (16, 17) du renfoncement (12).

3. Accumulateur selon l'une ou l'autre des revendications 1 et 2, caractérisé en ce que les moyens d'enclenchement (25, 26 ; 27, 28 ; 29, 30) sont prévus au-dessus de la face de fond (14) entre la saillie (34, 34'), s'étendant depuis le panneau de recouvrement (18) vers le bas, et les parois latérales (16, 17) du renfoncement (12).

4. Accumulateur selon l'une quelconque des revendications précédentes, caractérisé en ce que les moyens d'enclenchement présentent des renfoncements d'enclenchement respectifs (26, 28, 30) qui sont ménagés au-dessus de la face de fond (14) dans les parois latérales (16, 17) du renfoncement (12) et/ou dans des parties (31, 32) des parois latérales du couvercle (13), qui se trouvent à la même hauteur et sont directement voisines de ces parois du renfoncement, et en ce que la saillie (34, 34') du panneau de recouvrement (18) porte une saillie d'enclenchement (27, 29, 30) coopérant avec le renfoncement d'enclenchement (26, 28, 30) et s'étend vers le bas au maximum jusqu'à la face de fond (14) du renfoncement (12).

5. Accumulateur selon la revendication 4, caractérisé en ce que les saillies d'enclenchement (25, 27, 29) ne s'étendent pas latéralement au-delà du contour extérieur du couvercle (13), en particulier au-delà d'un tablier de couvercle (33) prévu vers le bas sur celui-ci, ni au-delà du boîtier (40).

6. Accumulateur selon l'une quelconque des revendications précédentes, caractérisé en ce que le panneau de recouvrement (18) porte sur l'une de ses bandes de bord (22) reposant sur la surface du couvercle au moins une et de préférence deux tiges de maintien (20) s'étendant vers le bas dans des perçages complémentaires (21) du couvercle (25).

7. Accumulateur selon la revendication 6, caractérisé en ce que la saillie (34, 34') portant les saillies d'enclenchement (25, 27, 29) est agencée sur ou à proximité de l'autre bord (23).

8. Accumulateur selon l'une quelconque des revendications précédentes, caractérisé en ce que dans l'une (16) des parois latérales (16, 17) du renfoncement (12) est prévu un renfoncement d'enclenchement (30) dans lequel s'engage de façon détachable une saillie d'enclenchement (29) s'étendant depuis une région proche du bord du panneau de recouvrement (18) vers le bas et réalisée sous forme d'une barrette élastique susceptible d'être fléchie élastiquement perpendiculairement depuis la paroi latérale (16).

9. Accumulateur selon la revendication 8, caractérisé en ce que le renfoncement d'enclenchement (30) est ménagé à proximité du coin (35) où la paroi latérale (16) du renfoncement (12) se transforme dans la paroi latérale (31) du couvercle (13).

10. Accumulateur selon l'une quelconque des revendications 1 à 7, caractérisé en ce que dans la région du coin (35) est prévu un renfoncement d'enclenchement (26) entre l'une des parois latérales (16) du renfoncement (12) et la paroi latérale adjacente (31) du couvercle (13), renfoncement (26) dans lequel s'engage une saillie d'enclenchement (25) s'étendant depuis le panneau de recouvrement (18) vers le bas et réalisée sous forme d'une barrette élastique.

11. Accumulateur selon la revendication 10, caractérisé en ce que la saillie (34') est susceptible d'être fléchie élastiquement en éloignement depuis l'une des parois latérales (16, 31) ou du coin (35), afin de pouvoir faire dégager la saillie d'enclenchement (25) hors du renfoncement d'enclenchement (26).

12. Accumulateur selon l'une quelconque des revendications 1 à 7, caractérisé en ce que pour former un renfoncement d'enclenchement (28), une barrette d'enclenchement (36) fait saillie à partir de l'une des parois latérales (16, 17) du renfoncement (12) à une distance par rapport à la face de fond (14) du renfoncement (12), telle que le renfoncement d'enclenchement (28) est ménagé au-dessous.

13. Accumulateur selon la revendication 12, caractérisé en ce que la barrette d'enclenchement (36) se trouve dans la région supérieure de la paroi latérale associée (16, 17).

14. Accumulateur selon l'une ou l'autre des revendications 12 et 13, caractérisé en ce que la barrette d'enclenchement (36) est prévue au niveau du coin (35) vers la partie voisine (31) de la paroi latérale du couvercle (13).

15. Accumulateur selon la revendication 14, caractérisé en ce que la barrette d'enclenchement (36) est réalisée sous forme de prolongement de la partie supérieure de la paroi latérale voisine (31) du couvercle (13).

16. Accumulateur selon l'une quelconque des revendications précédentes, caractérisé en ce que le couvercle (13) est constitué par deux parties de couvercle (13', 13'') séparées l'une de l'autre par un plan de soudage horizontal (37).

17. Accumulateur selon l'une quelconque des revendications précédentes, caractérisé en ce que parallèlement à la bande de bord (22) retenue sur le couvercle (13) par les moyens de maintien latéral (21, 22), en particulier par les tiges de maintien (20) et par les perçages (21), le panneau de recouvrement (18) comprend une charnière (42) autour de laquelle la partie (18') du panneau de recouvrement (18), portant la saillie d'enclenchement (25, 27, 29), peut être rabattue vers le haut ou vers le bas, les moyens d'enclenchement (25, 26 ; 27, 28 ; 29, 30) étant réalisés de manière à pouvoir être amenés en engagement ou être dégagés les uns des autres par rabattement autour de la charnière (42) de la partie (18') qui les porte.

18. Accumulateur selon la revendication 17, caractérisé en ce que la charnière (42) se trouve au niveau du bord supérieur de la paroi latérale associée (17).

19. Accumulateur selon l'une ou l'autre des revendications 17 et 18, caractérisé en ce que la charnière (42) est réalisée par une rainure prévue de préférence dans la face inférieure du panneau de recouvrement (18).

20. Accumulateur selon l'une quelconque des revendications précédentes, caractérisé en ce que les bords du panneau de recouvrement (18) sont en alignement avec les bords supérieurs des parois latérales (31, 32) du couvercle (13), et/ou en ce que leur coin (18''') en alignement avec le coin (19, 40) du couvercle (13) ou du boîtier (24) est arrondi.
